(19) **Europäisches Patentamt European Patent Office Office européen des brevets**

(11) **EP 1 472 818 B1**

(12) **FASCICULE DE BREVET EUROPEEN**

(45) Date de publication et mention
de la délivrance du brevet:
**21.03.2007 Bulletin 2007/12**

(21) Numéro de dépôt: **02703679.7**

(22) Date de dépôt: **07.02.2002**

(51) Int Cl.:
*H04L 12/24* (2006.01)   *H04L 12/26* (2006.01)

(86) Numéro de dépôt international:
**PCT/FR2002/000485**

(87) Numéro de publication internationale:
**WO 2003/073697 (04.09.2003 Gazette 2003/36)**

(54) **METHODE D'IDENTIFICATION D'ELEMENTS LIMITANT LES PERFORMANCES D'UN RESEAU DE COMMUNICATION**

VERFAHREN ZUR IDENTIFIKATION VON DEN DURCHSATZ BEGRENZENDEN ELEMENTEN IN EINEM KOMMUNIKATIONSNETZ

METHOD OF IDENTIFYING ELEMENTS LIMITING THE PERFORMANCES OF A COMMUNICATION NETWORK

(84) Etats contractants désignés:
**DE GB**

(43) Date de publication de la demande:
**03.11.2004 Bulletin 2004/45**

(73) Titulaire: **BMC Software Development
13799 Aix-en-Provence Cédex 3 (FR)**

(72) Inventeurs:
• **BRUNO, Alain
13840 Rognes (FR)**
• **GERMAIN, Pierre
13170 Les Pennes Mirabeau (FR)**

(74) Mandataire: **Kensett, John Hinton
Saunders & Dolleymore,
9 Rickmansworth Road
Watford,
Hertfordshire WD18 0JU (GB)**

(56) Documents cités:
**WO-A-00/11629           US-A- 5 907 810**

• **VOLOCHINE T ET AL: "NETWORK MANAGEMENT AND TRAFFIC ANALYSIS FOR CICNET" IEEE NETWORK,IEEE INC. NEW YORK, US, vol. 5, no. 5, 1 septembre 1991 (1991-09-01), pages 41-50, XP000248472 ISSN: 0890-8044**

**Description**

La présente invention concerne une méthode d'identification d'éléments limitant les performances d'un réseau de communication.

Un tel réseau relie une pluralité d'éléments chacun connecté à au moins un autre élément. On distingue les éléments terminaux, accessibles aux usagers du réseau, les éléments intermédiaires tels que commutateurs ou routeurs qui sont disposés entre les différents terminaux, et les liens physiques qui appartiennent également au réseau.

Le réseau permet d'acheminer de l'information entre deux terminaux ou même entre deux éléments intermédiaires, le terme information devant ici être pris dans son acception la plus large.

Couramment, l'information est transmise par paquets de données qui sont traités indépendamment les uns des autres. Le protocole de communication "IP" employé dans le réseau Internet est un exemple de ce type de transmission de l'information.

Le réseau interconnecte donc une pluralité d'éléments et il convient de s'assurer qu'il présente les performances requises. Ces performances consistent essentiellement à assurer la transmission d'un volume d'information donné dans un délai donné, en partant d'un terminal, en passant par un ou plusieurs éléments intermédiaires, pour arriver à un autre terminal.

Les différents éléments, intermédiaires ou terminaux, sont pourvus d'équipements qui peuvent limiter les performances de transmission. On pense au débit d'une interface, à un taux de perte d'information, à la saturation des ressources d'un processeur ou au temps de transit entre deux points du réseau. A titre d'exemple, le temps de transit entre deux terminaux dépend du débit de l'interface de sortie du premier terminal, de la charge d'un commutateur et du débit sur un lien physique.

Le temps de transit est une variable répartie car elle met en jeu plusieurs éléments du réseau, tandis que le débit de l'interface, la charge du commutateur et le débit du lien sont des variables locales car elles ne concernent qu'un élément du réseau.

Une variable répartie qui dépend donc de plusieurs variables locales peut tomber en dessous d'un seuil de performances requis.

WO-A-0011629, révèle un système pour le traffic de controle, sur un réseau par commande d'itinéraire.

La présente invention a ainsi pour objet une méthode d'identification de la ou des variables locales qui sont responsables de cette baisse de performance.

Selon l'invention, méthode d'identification d'au moins un élément de réseau limitant les performances d'un réseau, comprenant les étapes suivantes:

- mesures d'une variable répartie R définissant un état d'un service de communication entre un premier et un deuxième élément du réseau,
- mesures d'un ensemble de variables locales Vj définissant l'état d'un autre élément de réseau au moins situé entre les premier et deuxième éléments du réseau,
- calcul d'une function de correlation multidimensionnelle de la variable répartie R avec l'ensemble de variables locales Vj par régression multilinéaire dans laquelle un modèle initial est ainsi défini:

$$M = C \cdot I + \sum_j Wj \cdot Vj ,$$

où

- Vj est une série temporelle d'une variable locale j,
- C est une constante predeterminée,
- I est un vecteur identité, et
- Wj est un poids de la variable locale j dans le modèle initial tel que déterminé par minimisation d'une function de mérite $X^2$ qui représente une somme des carrés des écarts entre des valeurs du modèle initial et des valeurs correspondantes de la variable répartie R:

$$X^2 = \sum_i \left[ Ri - \left( C + \sum_j Wj.Vji \right) \right]^2 ,$$

où

- Ri est la ième valeur de la variable répartie,
- Vji est la ième valeur de la variable locale j,
- identification d'un element limitant comme l'élément dont la variable locale présente la plus forte contribution dans la fonction de corrélation.

De préférence, le réseau de communication est un grand réseau de communication et comprenant en outre la substitution d'un modèle dérivé audit modèle initial M.

Avantageusement, le modèle dérivé comprend le calcul d'un estimateur d'influence Elj pour chaque variable locale Vj comme suit:

$$Elj = CCj^a \cdot BSEj^b \cdot Wj^c \cdot CAW^d \cdot Q^e ,$$

où

- CCj est un coefficient de corrélation des variables locales Vj et de la variable répartie R,
- BSEj est un terme d'erreur,
- CAW est une somme de valeurs absolues des poids Wj,
- Q est le nombre de variables locales intervenant dans le modèle dérivé,
- a, b, c, d et e sont des parameters d'adjustement.

De préférence, le coefficient de corrélation CCj est ainsi défini:

$$CCj = \frac{\sum_i \left[ (Ri - Rm) \cdot (Vji - Vjm) \right]}{\sqrt{\sum_i \left[ (Ri - Rm)^2 \right]} \cdot \sqrt{\sum_i \left[ (Vji - Vjm)^2 \right]}} ,$$

où

- Ri est la ième valeur de la variable répartie R,
- Rm est la valeur moyenne de la variable répartie R,
- Vji est la ième valeur de la variable locale j, et
- Vjm est la valeur moyenne de la variable locale j.

De préférence, BSEj est ainsi définie:

$$BSEj = \frac{\sum_i \left(\frac{Ri - R\min}{R\max - R\min}\right)^u}{\sqrt{\sum_i \left[[(Ri - Rm)\cdot(Vji - Vjm)]^2 \cdot \left(\frac{Ri - R\min}{R\max - R\min}\right)^u\right]}},$$

où,

- Rmin est la valeur minimale de la variable répartie R,
- Rmax est la valeur maximale de la variable répartie R, et
- u est un exposant de pondération.

De préférence, les parameters d'ajustement sont fixes comme suit : a = 1; b=-2; c=2; d=-2; e=2.

La présente invention apparaîtra maintenant avec plus de détails dans le cadre de la description qui suit d'exemples de réalisation donnés à titre illustratif en se référant aux figures annexées qui représentent :

- la figure 1, un schéma d'un réseau auquel s'applique l'invention, et
- la figure 2, un schéma d'une procédure de réduction du nombre de variables locales selon l'invention.

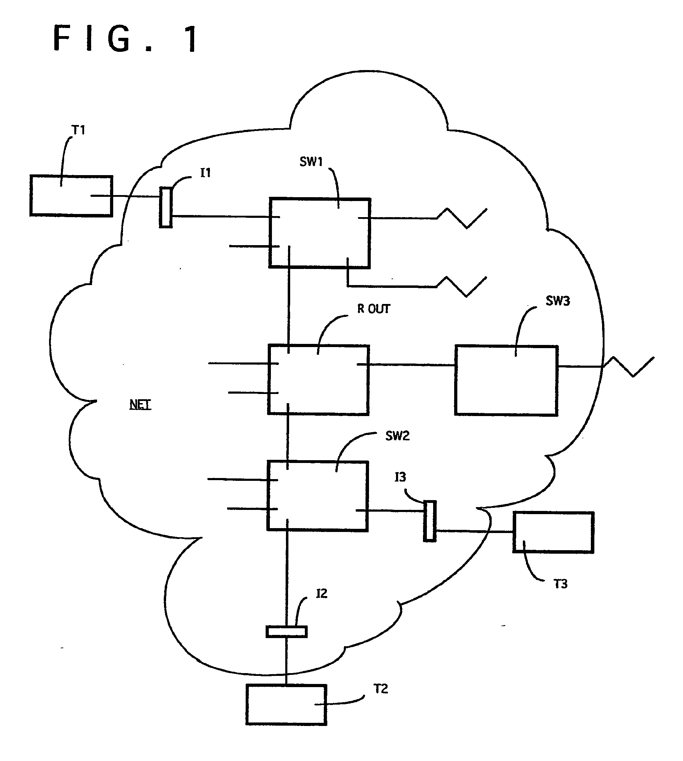

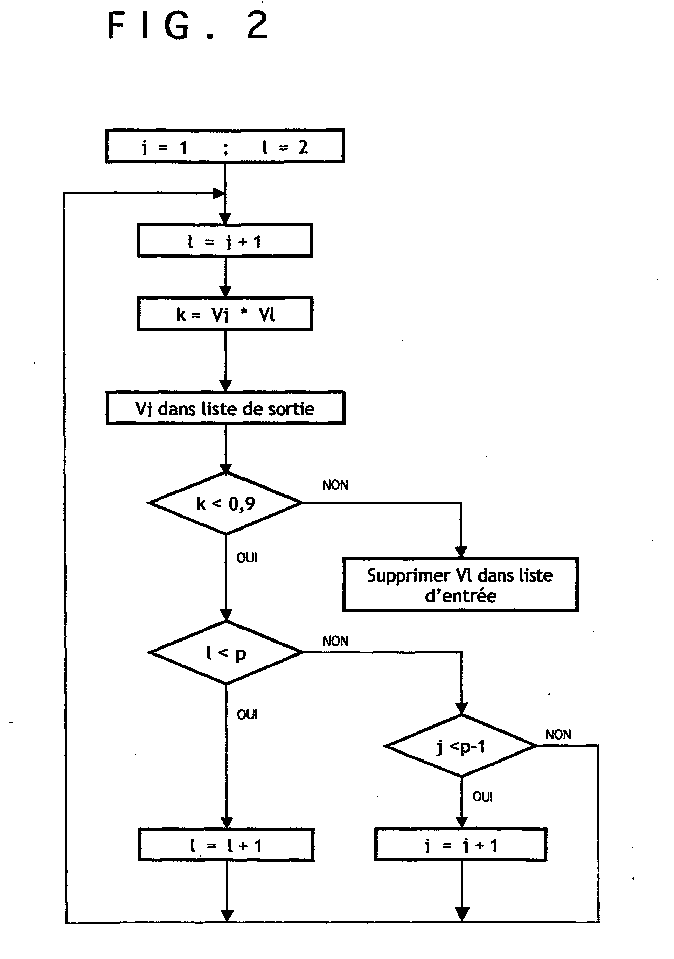

En référence à la figure 1, le réseau NET connecte notamment un premier T1, un deuxième T2 et un troisième T3 terminal respectivement par l'intermédiaire d'une première 11, d'une deuxième 12 et d'une troisième 13 interface. Le réseau comporte trois commutateurs SW1, SW2, SW3, et un routeur ROUT.

La liaison du premier T1 au troisième T3 terminal implique donc la première interface I1, le premier commutateur SW1, le routeur ROUT, le deuxième commutateur SW2 et le troisième interface 13. Cette liaison permet d'assurer un service de communication.

La variable répartie que constitue le temps de transit entre le premier T1 et le troisième T3 terminaux dépend donc d'une pluralité de variables locales au nombre desquelles figurent :

- le débit de la première interface 11,
- le taux d'utilisation du processeur du premier commutateur SW1,
- le débit sur le lien entre le premier commutateur SW1 et le routeur ROUT,
- le volume instantané de donnés traitées par le routeur ROUT,
- le taux d'erreurs sur le lien entre le routeur ROUT et le deuxième commutateur SW2,
- le taux d'utilisation de la mémoire du deuxième commutateur SW2, et
- le débit de la troisième interface 13.

Si ce temps de transit devient trop élevé, il s'agit de savoir quelle variable locale en est la principale cause, et éventuellement quelles autres variables locales jouent également un moindre rôle dans cette baisse de performance.

Les différentes variables, locales ou réparties, sont des valeurs moyennes de valeurs instantanées échantillonnées en synchronisme. Diverses techniques peuvent être utilisées pour acquérir la valeur de ces variables et on mentionnera donc la mesure intrusive et la collecte d'indicateurs locaux.

La mesure intrusive se fait au moyen d'un programme qui effectue une action prescrite durant laquelle différentes variables sont mesurées telles que le temps total d'exécution.

La collecte d'indicateurs locaux consiste à consulter les listes d'indicateurs tenus par la plupart des équipements, ces indicateurs reflétant leurs états.

Cette consultation peut se faire au moyen d'un protocole de communication dédié à la gestion comme SNMP pour le vocable anglo-saxon "Simple Network Management Protocol".

La recherche de la ou des variables locales responsables de la dégradation de la variable répartie se fait au moyen d'une corrélation multidimensionnelle.

A titre d'exemple, cette recherche s'obtient en opérant une régression multilinéaire par minimisation des moindres carrés et pour plus de détails, on peut se référer à l'ouvrage : "Numerical Recipes : The Art Of Scientific Computing", William H. PRESS, Saul A. TEUKOLSKI, William T. VETTERLING, Brian P. FLANNERY, Cambridge University Press.

Si l'on note M le modèle de la variable répartie :

$$M = C.I + \sum_j Wj.Vj,$$

où:

- Vj est la série temporelle de la variable locale j,
- Wj le poids de la variable j dans le modèle,
- C est une constante, et
- I est le vecteur identité(1,1,.,1).

La régression multilinéaire conduit à l'obtention des poids Wj suite à la minimisation de la fonction de mérite $X^2$ qui représente la somme des carrés des écarts entre les valeurs du modèle et les valeurs correspondantes de la variable répartie :

$$X^2 = \sum_i \left[ Ri - \left( C + \sum_j Wj.Vji \right) \right]^2,$$

où

- Ri est la ième valeur de la variable répartie,
- Vji est la ième valeur de la variable locale j,
- C et Wj ont les valeurs précédemment définies.

A titre d'exemple, considérons le cas d'une variable répartie R dépendant de trois variables locales, V, V2, V3 :

| i | 1 | 2 | 3 | 4 | 5 |
|-----|--------|--------|--------|--------|--------|
| R | 151 | 163 | 219 | 247 | 178 |
| V1 | 64 | 68,8 | 114,4 | 125,6 | 81,2 |
| V2 | 1428 | 1464 | 1752 | 2516 | 1584 |
| V3 | 784,74 | 838,86 | 1077,8 | 1384,5 | 807,27 |

Le modèle est de la forme:

$$M = C.I + W1.V1 + W2.V2 + W3.V3$$

La fonction de mérite $X^2$ s'écrit :

$$X^2 = \sum_i \left[ Ri - (C + W1.V1i + W2.V2i + W3.V3i) \right]^2$$

Il convient alors de dériver cette fonction par rapport à W1, W2, W3 et C :

$$d\left(X^2\right)/dW1 = 2.\sum_i \left[ V1i.\left[ Ri - (C + W1.V1i + W2.V2i + W3.V3i) \right] \right] = 0$$

$$d\left(X^2\right)/dW2 = 2.\sum_i \left[ V2i.\left[ Ri - (C + W1.V1i + W2.V2i + W3.V3i) \right] \right] = 0$$

$$d\left(X^2\right)/dW3 = 2.\sum_{i}\left[V3i.\left[Ri-\left(C+W1.V1i+W2.V2i+W3.V3i\right)\right]\right]=0$$

$$d\left(X^2\right)/dC = 2.\sum_{i}\left[Ri-\left(C+W1.V1i+W2.V2i+W3.V3i\right)\right]=0$$

La résolution de ce système de quatre équations à quatre inconnues donne la solution suivante :

W1 =1,182
W2 = 0,0194
W3 = - 0,00130
C=51,67

Il apparaît que la variable répartie R est fortement corrélée à la variable locale V1 qui représente le principal élément limitant. Ainsi, si cette variable représente le taux d'utilisation du processeur du premier commutateur SW1, une valeur anormalement élevée de la variable répartie (le temps de transit) sera corrigée en remplaçant ce processeur par un processeur plus puissant. Une solution alternative consisterait, dans le cas où le réseau le permet, à décharger ce premier commutateur SW1, en déroutant une partie du trafic qui lui est alloué sur un autre commutateur.

Il apparaît également que la variable locale C2 a un poids W2 sensiblement supérieur à celui W3 de la variable V3. Ainsi, il est possible de quantifier la contribution respective des différentes variables locales Vj à la valeur de la variable répartie R, contribution qui est directement lié à leurs poids respectifs Wj. On en déduit ainsi, selon le rapport entre ces poids, la présence d'un ou de plusieurs éléments limitant.

Dans l'exemple numérique ci-dessus, seulement trois variables locales sont prises en compte. Cependant dans un réseau d'une taille importante, le nombre de telles variables est beaucoup plus considérable, jusqu'à plusieurs dizaines de milliers. Or, le temps de calcul d'un modèle d'une variable répartie croît avec le cube du nombres des variables locales considérées. A priori, toutes les variables locales du réseau peuvent influer sur une variable répartie et devraient donc apparaître dans le modèle correspondant. Il apparaît ainsi que ce temps de calcul peut rapidement devenir démesuré. Il est donc préférable de prévoir des moyens pour réduire tant que faire se peut le nombre des variables impliquées dans le modèle.

On prévoit par conséquent une table dans laquelle figurent toutes les variables, qu'elles soient locales ou réparties.

En référence à la figure 2, un premier moyen consiste à rechercher si deux variables locales sont fortement corrélées pour, dans l'affirmative, supprimer une de ces variables du modèle. L'ensemble des p variables locales figure dans une liste d'entrée et l'on considère la variable Vj, la valeur j figurant dans un premier compteur initialisé à 1.

Un deuxième compteur est prévu qui est initialisé à la valeur I = j + 1.

Dans une opération d'agrégation, le calcul du coefficient de corrélation k, entre les variables Vj et VI est alors effectué. La variable Vj est introduite dans une liste de sortie et si le coefficient de corrélation k excède un seuil prédéterminé, 0,9 par exemple, la variable VI est supprimée de la liste d'entrée.

L'opération précédente est itérée en incrémentant le deuxième compteur d'une unité jusqu'à ce que I atteigne la valeur p.

Lorsque ce deuxième compteur atteint la valeur p, le premier compteur est à son tour incrémenté d'une unité, j = j + 1, le deuxième compteur est réinitialisé, I = j + 1, et un nouveau coefficient de corrélation est calculé.

L'opération d'agrégation est ainsi poursuivie jusqu'à ce que les premier et deuxième compteurs soient respectivement affectés des valeurs (p - 1) et p.

Un deuxième moyen pour réduire le nombre de variables locales à prendre en compte dans le modèle consiste à calculer le coefficient de corrélation de chaque variable locale avec la variable répartie.

Selon une première option, seules sont conservées les variables locales conduisant à un coefficient supérieur à un seuil prédéterminé, 0,5 par exemple.

Selon une deuxième option, seules sont conservées les variables locales conduisant aux coefficients les plus élevés. Dans ce cas, on retient un nombre prédéterminé de variables locales, 5 par exemple.

On remarquera que, alternativement, le deuxième moyen peut être mis en oeuvre avant le premier moyen.

Un troisième moyen pour diminuer le nombre de variables locales consiste à effectuer une présélection de ces variables.

En premier lieu, il est préférable de supprimer toutes les variables dite de "haut niveau" qui ne permettraient pas d'exercer une action corrective sur l'un des éléments du réseau. Il en est ainsi du taux de paquets perdus suite à une saturation des ressources d'un équipement ; bien que cette variable soit locale, elle renseigne peu sur la correction à apporter. Il en va de même des différents temps de transit.

L'information correspondante est portée dans la table en regard des variables concernées.

En second lieu, il est avantageux de supprimer les variables locales qui sont naturellement corrélées à la variable répartie, de par la nature du réseau. En effet, de telles variables n'apportent pas d'information additionnelle. Par exemple, le temps de transit réseau et le taux de paquets perdus sont intrinsèquement corrélés.

Là aussi, l'information correspondante est portée dans la table en regard des variables concernées.

En troisième lieu, il est souhaitable de supprimer les variables locales qui ne présentent pas suffisamment de valeurs mesurées pendant une période donnée, ceci qu'elle qu'en soit la raison. Cette information peut également être portée dans la table en regard des variables concernées.

Ce troisième moyen peut naturellement être employé avant le premier ou le deuxième moyen. Il est préférablement employé au début de la méthode selon l'invention.

Bien que divers moyens aient été proposés pour limiter le nombre de variables locales, ce nombre peut s'avérer encore trop élevé pour obtenir un temps de calcul du modèle acceptable. Ainsi si n variables locales ont été retenues, on peut calculer des modèles dérivés en retenant toutes les combinaisons qui comptent au plus d variables locales, étant entendu que d est un nombre entier inférieur à n fixé de manière appropriée.

Il convient alors de sélectionner celui ou ceux des modèles dérivés qui décrivent au mieux le phénomène étudié et qui seront substitués au modèle initial pour le calcul de la régression multilinéaire.

Pour ce faire on définit un estimateur d'influence $Elj$ qui précise l'influence de la variable locale $Vj$ dans le modèle dérivé en cause. Cet estimateur prend par exemple la forme suivante :

$$Elj = CCj^a \cdot BSEj^b \cdot Wj^c \cdot CAW^d \cdot Q^e \, ,$$

où:

- $CCj$ est le coefficient de corrélation de la variable locale $Vj$ et de la variable répartie R,
- $BSEj$ est l'erreur,
- CAW est la somme des valeurs absolues des poids $Wj$,
- Q le nombre de variables locales intervenant dans le modèle, et
- a, b, c, d et e sont des paramètres d'ajustement.

Le coefficient de corrélation $CCj$ est défini comme suit :

$$CCj = \frac{\sum_i \left[ (Ri - Rm) \cdot (Vji - Vjm) \right]}{\sqrt{\sum_i \left[ (Ri - Rm)^2 \right]} \cdot \sqrt{\sum_i \left[ (Vji - Vjm)^2 \right]}} \, ,$$

où

- $Ri$ est la ième valeur de la variable répartie R,
- $Rm$ est la valeur moyenne de la variable répartie R,
- $Vji$ est la ième valeur de la variable locale j, et
- $Vjm$ est la valeur moyenne de cette variable locale j.

L'erreur $BSEj$ est définie comme suit :

$$BSEj = \frac{\sum_{i}\left(\frac{Ri-Rmin}{Rmax-Rmin}\right)^{u}}{\sqrt{\sum_{i}\left[\left[(Ri-Rm).(Vji-Vjm)\right]^{2}.\left(\frac{Ri-Rmin}{Rmax-Rmin}\right)^{u}\right]}} \quad,$$

où

- Rmin est la valeur minimale de la variable répartie R,
- Rmax est la valeur maximale de la variable répartie R, et
- u est un exposant de pondération.

Généralement, on adopte la valeur 0 pour l'exposant de pondération u, l'erreur correspondant alors à l'erreur standard telle que définie dans l'ouvrage précédemment cité.

De même, à titre d'exemple, les paramètres d'ajustement sont fixés comme suit :

a=1 ; b=-2; c=2; d=-2; e=2.

Il s'ensuit que l'estimateur d'influence Elj prend la forme suivante :

$$Elj = CCj . (Wj . Q . CAW)^{2} / BSEj^{2}$$

Les estimateurs d'influence Elj sont donc calculés relativement à certains au moins des modèles dérivés pour chaque variable locale. De préférence, tous les modèles dérivés sont pris en compte.

Selon une première option, un modèle dérivé est sélectionné seulement si tous les estimateurs d'influence relatifs à ce modèle excédent un seuil de validation prédéterminé.

Selon une deuxième option qui peut être retenue alternativement ou cumulativement avec la première option, un modèle dérivé est sélectionné seulement si le rapport entre chaque estimateur d'influence et l'estimateur d'influence le plus élevé excède un rapport de validation prédéterminé.

La première option, la seconde option ou une combinaison de ces deux options peuvent conduire à un unique modèle dérivé sélectionné. Cependant, dans le cas contraire, il convient de décider lequel des modèles sélectionnés doit être conservé.

Pour ce faire on définit un estimateur d'erreur EE qui précise l'erreur entre le modèle dérivé MD concerné et la variable répartie. Cet estimateur prend par exemple la forme suivante :

$$EE = \frac{\sum_{i}\left(\frac{Ri-Rmin}{Rmax-Rmin}\right)^{t}}{\sqrt{\sum_{i}\left[\left[(Ri-Rm).(MDi-MDm)\right]^{2}.\left(\frac{Ri-Rmin}{Rmax-Rmin}\right)^{t}\right]}} \quad,$$

où

- MDi est la ième valeur du modèle dérivé MD,
- MD est la valeur moyenne du modèle dérivé MD, et
- t est un exposant de correction.

Généralement, on adopte la valeur 0 pour l'exposant de correction t, ce qui correspond ici aussi à l'erreur dite standard.

Avantageusement, le modèle dérivé qui est conservé est celui qui conduit à l'estimateur d'erreur présentant la valeur la plus faible.

Par ailleurs, l'invention a été décrite en référence à une variable répartie particulière, à savoir un temps de transit entre deux terminaux. Elle s'applique naturellement à tout type de variable répartie et on mentionnera, entre autres :

- le temps de transit entre deux points quelconques du réseau,
- le temps de réponse applicatif, c'est à dire le temps qui s'écoule entre la formulation d'une requête par un usager et la réponse à cette requête,
- le taux de paquets perdus entre deux points du réseau.

De même, il ne faut en aucun cas considérer que les variables locales mentionnées plus haut puissent constituer une quelconque limitation de l'invention.

Ainsi, les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

**Revendications**

1. Méthode d'identification d'au moins un élément de réseau limitant les performances d'un réseau de télécommunications, comprenant les étapes suivantes:

   - mesures d'une variable répartie R définissant un état d'un service de communication entre un premier et un deuxième élément du réseau,
   - mesures d'un ensemble de variables locales Vj définissant l'état d'un autre élément de réseau au moins situé entre les premier et deuxième éléments du réseau,
   - calcul d'une function de corrélation multidimensionnelle de la variable répartie R avec l'ensemble de variables locales Vj par régression multilinéaire dans laquelle un modèle initial est ainsi défini:

$$M = C \cdot I + \sum_{j} Wj \cdot Vj,$$

   où

   - Vj est une série temporelle d'une variable locale j,
   - C est une constante predeterminée,
   - I est un vecteur identité, et
   - Wj est un poids de la variable locale j dans le modèle initial tel que déterminé par minimisation d'une function de mérite $X^2$ qui représente une somme des carrés des écarts entre des valeurs du modèle initial et des valeurs correspondantes de la variable répartie R:

$$X^2 = \sum_{i} \left[ Ri - \left( C + \sum_{j} Wj.Vji \right) \right]^2,$$

   où

   - Ri est la ième valeur de la variable répartie,
   - Vji est la ième valeur de la variable locale j,
   - identification d'un element limitant comme l'élément dont la variable locale présente la plus forte contribution dans la fonction de corrélation.

**2.** Méthode selon la revendication 1, **caractérisée en ce que** le réseau de communication est un grand réseau de communication et comprenant en outre la substitution d'un modèle dérivé audit modèle initial M.

**3.** Méthode selon la revendication 1, ou 2, **caractérisée en ce que** le modèle dérivé comprend le calcul d'un estimateur d'influence Elj pour chaque variable locale Vj comme suit:

$$Elj = CCj^{a} \cdot BSEj^{b} \cdot Wj^{c} \cdot CAW^{d} \cdot Q^{e},$$

où

   - CCj est un coefficient de corrélation des variables locales Vj et de la variable répartie R,
   - BSEj est un terme d'erreur,
   - CAW est une somme de valeurs absolues des poids Wj,
   - Q est le nombre de variables locales intervenant dans le modèle dérivé,
   - a, b, c, d et e sont des parameters d'adjustement.

**4.** Méthode selon l'une quelconque des revendications 1 à 3, dans laquelle le coefficient de corrélation CCj est ainsi défini:

$$CCj = \frac{\sum_{i} [(Ri - Rm) \cdot (Vji - Vjm)]}{\sqrt{\sum_{i} [(Ri - Rm)^{2}]} \cdot \sqrt{\sum_{i} [(Vji - Vjm)^{2}]}},$$

où

   - Ri est la ième valeur de la variable répartie R,
   - Rm est la valeur moyenne de la variable répartie R,
   - Vji est la ième valeur de la variable locale j, et
   - Vjm est la valeur moyenne de la variable locale j.

**5.** Méthode selon la revendication 3 ou 4, **caractérisée en ce que** BSEj est ainsi définie:

$$BSEj = \frac{\sum_{i} \left(\frac{Ri - R\min}{R\max - R\min}\right)^{u}}{\sqrt{\sum_{i} \left[[(Ri - Rm) \cdot (Vji - Vjm)]^{2} \cdot \left(\frac{Ri - R\min}{R\max - R\min}\right)^{u}\right]}},$$

où

   - Rmin est la valeur minimale de la variable répartie R,
   - Rmax est la valeur maximale de la variable répartie R, et
   - u est un exposant de pondération.

**6.** Méthode selon la revendication 5, **caractérisée en ce que** ledit exposant de pondération vaut 0.

**7.** Méthode selon l'une quelconque des revendication 5, **caractérisée en ce qu'**elle comprend une étape de sélection desdits modèles dérivés.

8. Méthode selon la revendication 7, **caractérisée en ce que** ladite étape de sélection retient lesdits modèles dérivés dont tous les estimateurs d'influence (EIj) excèdent un seuil de validation prédéterminé.

9. Méthode selon l'une quelconque des revendications 7 ou 8, **caractérisée en ce que** ladite étape de sélection retient lesdits modèles dérivés pour lesquels le rapport entre chaque estimateur d'influence (EIj) et l'estimateur d'influence le plus élévé exceed un rapport de validation prédéterminé.

10. Méthode selon l'une quelconque des revendications 7 à 9, **caractérisée en ce qu'**elle comprend une étape pour calculer un estimateur d'erreur pour chacun desdits modèles dérivés qui estime l'erreur entre celui-ci et ladite variable répartie.

11. Méthode selon l'une quelconque des revendications 3 à 5, **caractérisée en ce que** les parameters d'ajustement sont fixes comme suit : a = 1; b = -2; c = 2; d = -2; e = 2.

12. Support exploitable par une machine fournissant des instructions pour executer chacune des étapes de la méthode selon l'une quelconque des revendications precedentes, lorsque ces instructions sont exécutées par la machine.

**Claims**

1. Method of identifying at least one network element that limits the performance of a telecommunications network, comprising the following steps:

   - measurements of a distributed variable R defining a status of a communication service between a first and second element of the network,
   - measurements of a set of local variables Vj defining the status of another network element at least situated between the first and second elements of the network,
   - calculating a multidimensional correlation function of the distributed variable R with the set of local variables Vj by multilinear regression in which an initial model is defined thus:

$$M = C \cdot I + \sum_{j} W_j \cdot V_j \, ,$$

   where

   - Vj is a time series of a local variable j,
   - C is a predetermined constant,
   - I is an identity vector, and
   - Wj is a weight of the local variable j in the initial model as determined by minimizing a merit function $X^2$, which represents a sum of squares of deviations between initial model values and corresponding distributed variable R values:

$$X^2 = \sum_{i} \left[ R_i - \left( C + \sum_{j} W_j V_{ji} \right) \right]^2 \, ,$$

   where

   - Ri is the $i^{th}$ value of the distributed variable,
   - Vji is the $i^{th}$ value of the local variable j,

   - identifying a limiting element as the element whose local variable makes the greatest contribution to the correlation function.

2. Method according to Claim 1, **characterized in that** the communication network is a large communication network and further comprising substitution of a derived model for initial model M.

3. Method according to Claim 1 or 2, **characterized in that** the derived model comprises calculating an influence estimator Elj for each local variable Vj as follows:

$$Elj = CCj^a \cdot BSEj^b \cdot Wj^c \cdot CAW^d \cdot Q^e \, ,$$

where

- CCj is a coefficient of correlation of the local variables Vj and the distributed variable R,
- BSEj is an error term,
- CAW is the sum of the absolute values of the weights Wj,
- Q is the number of local variables included in the derived model,
- a, b, c, d, and e are adjustment parameters.

4. Method according to any one of Claims 1 to 3, where the coefficient of correlation CCj is defined thus:

$$CCj = \frac{\sum_i \left[ (Ri - Rm) \cdot (Vji - Vjm) \right]}{\sqrt{\sum_i \left[ (Ri - Rm)^2 \right]} \cdot \sqrt{\sum_i \left[ (Vji - Vjm)^2 \right]}} \, ,$$

where

- Ri is the $i^{th}$ value of the distributed variable R,
- Rm is the mean value of the distributed variable R,
- Vji is the $i^{th}$ value of the local variable j , and
- Vjm is the mean value of the local variable j.

5. Method according to either of Claims 3 or 4, **characterized in that** BSEj is defined thus:

$$BSEj = \frac{\sum_i \left( \frac{Ri - Rmin}{Rmax - Rmin} \right)^u}{\sqrt{\sum_i \left[ [(Ri - Rm) \cdot (Vji - Vjm)]^2 \cdot \left( \frac{Ri - Rmin}{Rmax - Rmin} \right)^u \right]}} \, ,$$

where

- Rmin is the minimum value of the distributed variable R,
- Rmax is the maximum value of the distributed variable R, and
- u is a weight exponent.

6. Method according to Claim 5, **characterized in that** the value of said weight exponent is 0.

7. Method according to Claim 5, **characterized in that** it comprises a step to select said derived models.

8. Method according to Claim 7, **characterized in that** said selection step retains said derived models all of whose influence estimators (Elj) exceed a predetermined validation threshold.

9. Method according to either of Claims 7 or 8, **characterized in that** said selection step retains said derived models for which the ratio between each influence estimator (Elj) and the highest influence estimator exceeds a predetermined validation ratio.

10. Method according to any one of Claims 7 to 9, **characterized in that** it comprises a step to calculate an error estimator for each of said derived models, which estimates the error between it and said distributed variable.

11. Method according to any one of Claims 3 to 5, **characterized in that** the adjustment parameters are set as follows:

   a = 1; b = -2; c = 2; d = -2; e = 2.

12. Medium that can be utilized by a machine and provides instructions for performing each of the steps of the method according to any one of the preceding claims, when these instructions are executed by the machine.

**Patentansprüche**

1. Verfahren zur Identifikation wenigstens eines Elementes eines Netzwerkes, das die Leistungseigenschaften eines Telekommunikationsnetzwerkes begrenzt, mit den nachfolgenden Schritten:

   - Messen einer globalen Variable R, die den Zustand eines Kommunikationsdienstes zwischen einem ersten und einem zweiten Element des Netzwerkes definiert,
   - Messen einer Anzahl von lokalen Variablen Vj, die den Zustand eines weiteren Elementes des Netzwerks definiert, das wenigstens zwischen dem ersten Element und dem zweiten Element des Netzwerkes angeordnet ist,
   - Berechnen einer mehrdimensionalen Korrelationsfunktion der globalen Variable R mit der Anzahl der lokalen Variablen Vj durch multilineare Regression, wobei ein Startmodell wie folgt definiert ist:

$$M = C \cdot I + \sum_j W_j \cdot V_j \; ,$$

   wobei

   - Vj ist eine zeitliche Folge einer lokalen Variable j ist,
   - C ist eine vorbestimmte Konstante ist,
   - ein Einheitsvektor 1 ist und
   - Wj eine Gewichtung der lokalen Variable j in dem Startmodell ist, wie es durch Minimierung einer Abweichungsfunktion $X^2$ bestimmt ist, die eine Summe der quadratischen Abweichungen zwischen den Werten des Startmodells und den zugehörigen Werten der globalen Variable R darstellt:

$$X^2 = \sum_i \left[ R_i - \left( C + \sum_j W_j \cdot V_{ji} \right) \right]^2 \; ,$$

   wobei

   - Ri ist der i-te Wert ist,
   - Vji der i-te Wert der lokalen Variable j ist,
   - Identifizieren eines begrenzenden Elementes wie das Element, dessen lokale Variable den größten Beitrag in der Korrelationsfunktion liefert.

2. Verfahren nach Anspruch 1, **dadurch gekennzeichnet, dass** das Kommunikationsnetzwerk ein großes Kommunikationsnetzwerk ist und weiterhin die Substitution eines abgeleiteten Modells für das Startmodell M aufweist.

3. Verfahren nach Anspruch 1 oder 2, **dadurch gekennzeichnet, dass** das abgeleitete Modell die Berechnung eines Einflussabsolutwertes Elj für jede lokale Variable Vj wie folgt:

$$Elj = CCj^a \cdot BSEj^b \cdot Wj^c \cdot CAW^d \cdot Q^e ,$$

wobei

- CCj ein Korrelationskoeffizient der lokalen Variablen Vj und der globalen Variable R ist,
- BSEj ein Fehlerwert ist,
- CAW eine Summe der Absolutwerte der Gewichtungen Wj ist,
- Q die Anzahl der lokalen Variablen ist, die in das abgeleitete Modell eingehen,
- a, b, c, d und e Anpassungsparameter sind.

4. Verfahren nach einem der Ansprüche 1 bis 3, bei dem der Korrelationskoeffizient CCj wie folgt definiert ist:

$$CCj = \frac{\sum_i \left[ (Ri - Rm) \cdot (Vji - Vjm) \right]}{\sqrt{\sum_i \left[ (Ri - Rm)^2 \right]} \cdot \sqrt{\sum_i \left[ (Vji - Vjm)^2 \right]}} ,$$

wobei

- Ri der i-te Wert der globalen Variable R ist,
- Rm der Mittelwert der globalen Variable R ist,
- Vji der i-te Wert der lokalen Variable j ist und
- Vjm der Mittelwert der lokalen Variable j ist.

5. Verfahren nach dem Anspruch 3 oder 4, **dadurch gekennzeichnet, dass** BSEj wie folgt definiert ist:

$$BSEj = \frac{\sum_i \left( \frac{Ri - R\min}{R\max - R\min} \right)^u}{\sqrt{\sum_i \left[ [(Ri - Rm) \cdot (Vji - Vjm)]^2 \cdot \left( \frac{Ri - R\min}{R\max - R\min} \right)^u \right]}} ,$$

wobei

- Rmin der Minimalwert der globalen Variable R ist,
- Rmax der Maximalwert der globalen Variable R ist und
- U ein Gewichtungsexponent ist.

6. Verfahren nach Anspruch 5, **dadurch gekennzeichnet, dass** der Gewichtungsexponent den Wert Null aufweist.

7. Verfahren nach Anspruch 5, **dadurch gekennzeichnet, dass** es einen Auswahlschritt für abgeleitete Modelle aufweist.

8. Verfahren nach Anspruch 7, **dadurch gekennzeichnet, dass** der Auswahlschritt die abgeleiteten Modelle beibehält, deren Einflussabschätzwerte (Elj) einen vorbestimmten Validierungsschwellwert überschreiten.

9. Verfahren nach einem der Ansprüche 7 oder 8, **dadurch kennzeichnet, dass** der Auswahlschritt die abgeleiteten Modelle beibehält, bei denen das Verhältnis zwischen jedem Einflussabschätzwert (Eij) und dem größten Einflussabschätzwert ein vorbestimmtes Validierungsverhältnis überschreitet.

10. Verfahren nach einem der Ansprüche 7 bis 9, **dadurch gekennzeichnet, dass** es einen Schritt zum Berechnen eines Abschätzfehlers für jedes der abgeleiteten Modelle aufweist, der den Fehler zwischen diesem und der globalen Variable **abschätzt.**

11. Verfahren nach einem der Ansprüche 3 bis 5, **dadurch gekennzeichnet, dass** die Anpassungsparameter wie folgt festgelegt sind: a=1, b=-2, c=2, d=-2, e=2.

12. Einsatzbereiter Zusatz für eine Maschine, die die Anweisungen zum Ausführen jedes Schrittes des Verfahrens nach einem der vorangehenden Ansprüche bereitstellt, wenn diese Anweisungen durch die Maschine abgearbeitet werden.

# F I G . 1

# F I G . 2

```
┌─────────────────────────────┐
│      j = 1    ;    l = 2     │
└─────────────────────────────┘
                │
                ▼
┌─────────────────────────────┐
│         l = j + 1           │
└─────────────────────────────┘
                │
                ▼
┌─────────────────────────────┐
│       k =  Vj  *  Vl        │
└─────────────────────────────┘
                │
                ▼
┌─────────────────────────────┐
│     Vj dans liste de sortie │
└─────────────────────────────┘
                │
                ▼
              ╱─────╲              NON
             ╱ k < 0,9 ╲─────────────────┐
             ╲         ╱                  │
              ╲─────╱                     ▼
                │ OUI          ┌─────────────────────────┐
                │              │ Supprimer Vl dans liste │
                │              │       d'entrée          │
                ▼              └─────────────────────────┘
              ╱─────╲              NON
             ╱  l < p ╲──────────────────────────┐
             ╲        ╱                           │
              ╲─────╱                             ▼
                │ OUI                          ╱─────╲        NON
                │                             ╱ j <p-1 ╲──────────┐
                │                             ╲        ╱          │
                │                              ╲─────╱            │
                │                                │ OUI            │
                ▼                                ▼                │
┌───────────────────────┐        ┌───────────────────────┐      │
│       l = l + 1       │        │       j = j + 1       │      │
└───────────────────────┘        └───────────────────────┘      │
```